# EUROPEAN PATENT SPECIFICATION

(11) **EP 3 089 876 B1**
(45) Date of publication and mention of the grant of the patent: **06.05.2020**
(21) Application number: 14871113.8
(22) Date of filing: 16.12.2014
(51) Int. Cl.: B32B 38/00, B32B 38/16, B32B 43/00, B01D 53/00, B29C 37/00, B29C 70/34, B01D 53/02, B29C 70/54, B32B 37/10

(54) **ENHANCED VOLATILE REMOVAL FOR COMPOSITE LAYUP**
VERBESSERTE ENTFERNUNG VON FLÜCHTIGEN STOFFEN FÜR LAMINIERUNG
ÉLIMINATION AMÉLIORÉE DES MATIÈRES VOLATILES D'UN EMPILAGE COMPOSITE

(30) Priority: 20.12.2013 US 201361918714 P
(43) Date of publication of application: 09.11.2016
(73) Proprietor: United Technologies Corporation, Farmington, CT 06032 (US)
(72) Inventor: PARKIN, Michael, S. Glastonbury, Connecticut 06073 (US); WATSON, Charles R., Windsor, Connecticut 06095 (US)
(74) Representative: Dehns
(86) International application number: PCT/US2014/070508
(87) International publication number: WO 2015/095135

(56) References cited:
- WO-A1-95/29807
- WO-A1-95/29807
- US-A- 5 897 739
- US-A1- 2004 146 696
- US-A1- 2007 274 835
- US-A1- 2010 098 906
- US-A1- 2010 098 906
- US-A1- 2010 098 927
- US-A1- 2011 027 095

## Description

### CROSS REFERENCE TO RELATED APPLICATION

This application claims the benefit of provisional application Serial No 61/918,714, filed December 20, 2013, titled Enhanced Volatile Removal for Composite Layup.

### BACKGROUND

The disclosure relates to a method of manufacturing a composite article and to a composite article obtained by said method. More particularly, the disclosure relates to removal of volatiles produced during composite laminate production.

Currently many methods of manufacturing a molded fiber reinforced, resin based, composite article, involves combining a liquid, or solid resin with a strong fibrous reinforcement. The combined materials can be cured and converted into a structural composite article by the application of thermal energy and pressure.

One such method of manufacturing the composite article is by use of vacuum bag processing. Laid up layers of fibrous material and resin are placed on an impervious mold and covered by an impermeable membrane sealed at its edges. The sealed assembly is heated to temperatures between about 135 degrees Celsius (275 F) to about 365 degrees Celsius (700 F). The combination of pressure and temperature provides the necessary conditions to promote resin flow and coalesce individual layers together and cure the resin. As the resin is cured, volatiles are produced.

A vacuum is applied inside the assembly during portions of the cure cycle to draw off the volatiles. A porous fabric is used proximate to the impermeable membrane and exterior to the article being cured to allow for a gaseous flow path for the volatiles to escape.

However, the volatiles such as water and alcohols in gaseous/vapor form and can get trapped inside the resin matrix or between layers of the composite article before being removed. The gases that get trapped form voids in the resin or between the layers. The voids formed in the composite article compromise the mechanical properties of the composite article. Delamination of the composite article may also result from the failure to remove the volatiles during production.

The compromised mechanical properties due to voids in the composite article results in large scrap rates during production. The large scrap rates are costly.

US 2010/0098906 discloses systems and methods for the fabrication of prepregs possessing the ability to remove gases from within prepregs and prepreg layups prior to and/or during at least a portion of consolidation and cure processes to form composite structures.

What is needed is an improved method for manufacturing composite articles whereby volatiles and other gases created during the process are removed.

### SUMMARY

One aspect of the disclosure involves a composite article lay up comprising a first layer of resin impregnated fiber material and a second layer of resin impregnated fiber material. An open cell material is layered between the first layer and the second layer. The open cell material has no resin during a first stage of a resin cure cycle. The open cell material has passages configured to flow volatiles formed during the first stage of the resin cure cycle. The open cell material is configured to fill with the resin during a second stage of the resin cure cycle. The open cell material is configured to form an integral structure with the first layer and the second layer as part of the composite article at the completion of the resin cure cycle. The open cell material comprises a braided tube.

In an exemplary embodiment, at least one pattern is formed by the open cell material in the composite article. The pattern is configured to flow the volatiles from a first portion of the composite article to a second portion of the composite article to evacuate the volatiles out of the composite article. The pattern reduces the resistance to flow of the volatiles from within the composite article to an exit of the composite article. The open cell material comprises a braided tube.

In an exemplary embodiment, a method is disclosed including forming a laminate of fabric impregnated with resin. The method includes layering an open cell material in the absence of the resin within at least one layer of the laminate to form a composite article layup. The method includes encapsulating the composite article layup in a vacuum device to facilitate removal of volatiles from the composite article layup. The volatiles are vaporized from the resin. The method includes transporting the volatiles through the open cell material from the resin away from the composite article layup. The resin is flowed into the open cell material. The method includes filling open cells of the open cell material with resin after the volatiles have transported through the open cell material out of the vacuum device. The method includes consolidating the resin and the fabric and the open cell material. The method includes curing the resin in the composite article layup. The open cell material comprises a braided tube.

In various implementations, the method also includes applying a compaction vacuum to the composite article layup in the vacuum device. The method also includes degassing the resin in said composite article layup. The resin comprises a polyimide material. The method includes forming transport passages through the open cell material from the resin to an exterior of the composite article layup. The transport passages are formed in a predetermined pattern from a first location proximate the resin within the laminate to a second location proximate an outlet of the vacuum device. Layering the open cell material includes placing layers of open cell material between plies of the fabric. The pattern is selected from the group consisting of a strip, lattice, or sheet. The open cell material comprises a braided tube.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a partial cross-section schematic of a composite article lay up.
FIG. 2 is a plan view schematic of a composite article lay up.

Like reference numbers and designations in the various drawings indicate like elements.

### DETAILED DESCRIPTION

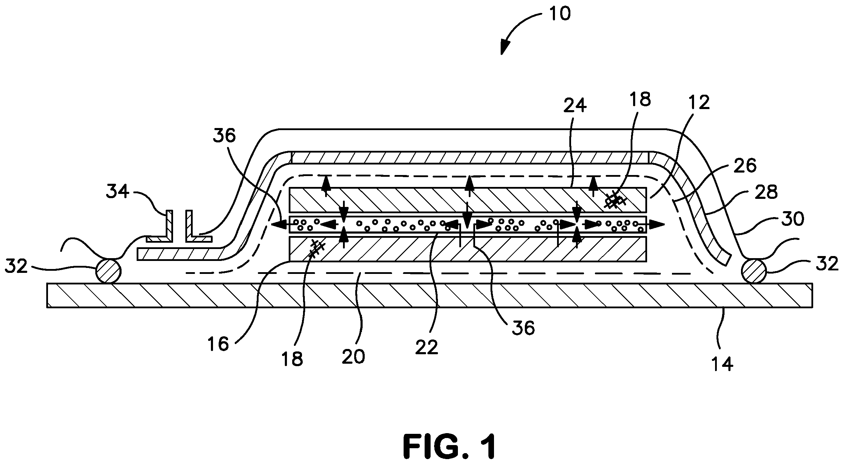

FIG. 1 shows a vacuum manufacturing assembly layup or assembly 10 for forming a composite article 12. The assembly 10 includes a base plate tool 14 that forms a shape or mold for the composite article 12. The plate 14 is rigid and impermeable and forms an air tight portion of the assembly 10. A laminate of fabric impregnated with resin or first layer 16 impregnated with resin 18 of the composite article 12 is positioned on the plate 14. A permeable fabric sheet 20 can be placed between the first layer 16 and the plate 14. An open cell material 22 made up of a porous media is laid onto the first layer 16. A second layer impregnated with resin 18 is positioned over the open cell material 22 to form the composite article 12. A release membrane 26 can be used in the manufacturing assembly 10. The release membrane 26 can be laid over the composite article 12 to allow for gases to pass through while preventing the flow of liquids past the membrane 26. A breather layer 28 covers the composite article 12 and provides open passages for gases to escape from the exterior of the composite article 12. An impermeable vacuum sheet 30 is situated over the breather layer 28 and on top of the composite article 12. The sheet 30 is sealed to the base plate 14 via sealant 32 such that there is no infiltration of exterior atmosphere and so that a vacuum can be pulled within the space formed between the vacuum sheet 30 and base plate 14 for the purpose of removing any gases formed during the resin 18 cure. A vacuum coupling 34 is attached to the impermeable vacuum sheet 30 and configured to attach to a vacuum device (not shown) for drawing a vacuum inside the space covered by the vacuum sheet 30.

During the process of manufacturing the composite article 12, the resin 18, impregnated in the first layer 16 and the second layer 24 of the composite article 12, is heated and undergoes distinct steps of curing before forming into the finished composite article 12. The resin 18 is heated to a point that allows for volatile materials to change phase into a gas or vapor. The resin produces water vapor and gases including gaseous alcohol and the like, known as volatiles 36 and shown as arrows. The volatiles 36 are drawn out of the composite article 12 due to the vacuum applied to the vacuum manufacturing assembly 10. As discussed earlier above, the volatiles may be trapped in the first and second layers' resin 18 and may form voids (not shown) in the composite article 12.

In an exemplary embodiment, with a resin 18 of polyimide, during cure the preimpregnated reinforcement material releases the solvent used to preimpregnate the layers 16, 24. In a typical release up to about 8 weight per cent of material is released. The solvent is usually alcohol, such as ethanol or methanol for a polyimide. Other solvent, such as methyl ethyl ketone, acetone and methylene chloride have been used or made present as volatile impurities in the resin 18 manufacturing process. The resin monomers react to form the cured or vitrified resin and release water and alcohol, typically ethanol or methanol, as a product of reaction.

The composite article 12 illustrated herein, is not subjected to the same problems caused by the formation of voids by the volatiles 36. The unique structure of the open cell material 22 allows for the evacuation of the volatiles 36 from within the structure of the composite article 12. The nature of the open cell material 22 creates multiple passages capable of permitting the flow of gases and vapor through the open cell material 22 and out of the composite article 12. The open cell material 22 is laid out between the first layer 16 and the second layer 24 in a fashion that allows for transport of the volatiles 36 from within the composite article 12 along the plane of the open cell material 22 in a lateral direction. In an exemplary embodiment, the volatiles 36 can flow in the plane of the laminate structure of the composite article 12 as well as through the plane in the transverse direction. The size and location of the pockets and open cells of the open cell material 22 allow for the evacuation of the volatiles 36 via shorter pathways out of the layers 16, 24.

The open cell material 22 can include an Astroquartz™ scrim, filaments and the like. The open cell material 22 in another embodiment can be made of other fibers such as E glass and S glass. The open cell material 22 can be placed in layers between the plies of the composite article 12. The open cell material 22 can be placed in any variety of alternating combinations between the layers of the composite article 12. According to the invention,the open cell material 22 comprises a braided tube and can be laid out in whole sheets, in strips, as braided tubes, in crossed lattice patterns, and the like.

The open cell material 22 allows for resin 18 to fill in the open cells at the proper time in the curing process. Ultimately, creating a strong integral structure without voids. The open cell material 22 remains stable at the elevated temperatures required to cure the resin 18 in the layers 16, 24. The open cell material 22 allow the volatiles 36 to escape early in the cure cycle. When the resin 18 flows during the cure cycle, the open cell material 22 becomes filled with resin 18 at a later stage of the cure cycle after the volatiles have been removed. Ultimately as the resin 18 that has filled the open cell material 22 cures completely, the open cell material 22 becomes solid and part of the composite article 12. The resin 18 filled open cell material 22 has the same material properties as the other portions of the composite article 12.

The resin 18 can be a polyimide resin, which can be a mixture of suitable aromatic diamine(s), the half ester of suitable aromatic half ester, such as, the phenyl ethynyl group. During the curing reaction the solvent used in the prepregnation operation is removed by heat and vacuum. The aromatic amine and the half esters from the tetraacid and the end cap initially react to form amic acid, which then further react to form an imidized molecule with up to approximately ten repeat units. Imidization is essentially complete at approximately 175 degrees Celsius. The imidized resin is further heated under vacuum and held at a temperature where the resin undergoes a melt with minimal crosslinking at about 225 degrees Celsius to about 315 degrees Celsius. The melt facilitates the reaction of unreacted materials and allows for the removal of remaining volatiles. The assembly 10 can be heated at a temperature sufficient to cause the endcap groups of the resin to react by an addition reaction with no volatile byproducts). The cured assembly 10 lay up is then cooled and removed from the base plate tool 14 and the processing materials removed.

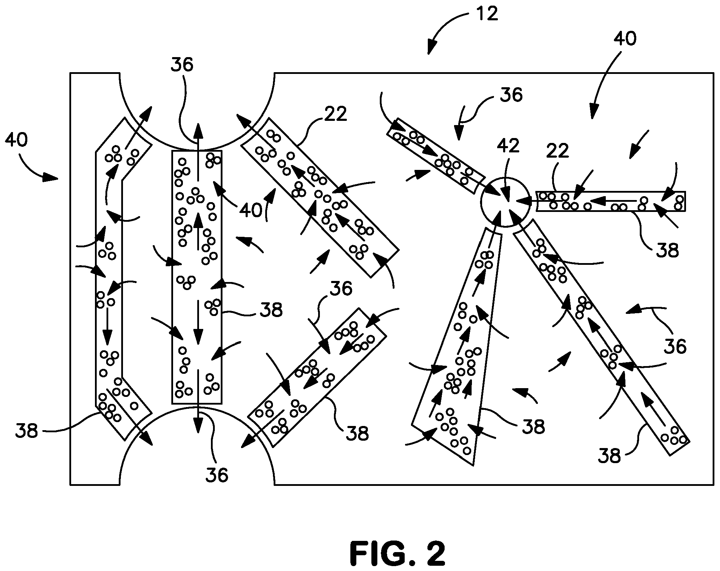

The exemplary embodiment in figure 2 includes a composite article 12 with multiple pathways 38 formed by use of the open cell material 22. In some composite article 12 designs, the size, shape and form of the composite article 12 create intrinsically long and difficult to vent and degas areas of the composite article 12 during the manufacturing process. The areas that are difficult to remove the volatiles 36 (shown as arrows) can be more prone to void formation due to trapped volatiles 36 in the layers 16, 24 during the curing process. The addition of the open cell material 22 in patterns 40 that extend from areas that may not vent volatiles 36 well to areas that have better volatile 36 removal properties, such as holes or open portions 42 in the composite article 12 or sections that are open, allows for the volatiles 36 to be removed early in the cure cycle as described above. The volatiles 36 are less likely to be trapped and cause voids. The patterns 40 of the open cell material 22 can shorten the pathways for the volatiles 36 to escape and be removed during degassing phases of manufacturing. When the vacuum is applied to the manufacturing assembly 10, the volatiles 36 flow through passages of the open cell material 22 exiting the composite article 12 and being evacuated from the assembly 10. The patterns 40 can include shapes and sizes that maximize the removal of volatiles 36 from the layers 16, 24 including sheets, strips, lattice and the like.

The patterns 40 made of the open cell material 22 are configured to be open to the flow of the volatiles 36 during the degassing phase of the resin curing. The patterns 40 are configured to be filled with resin 18 after degassing and allow for the resin 18 to flow into the open voids and ultimately fill the open cell material 22 and form as an integral structure with the layers 16, 24 in the composite article 12.

One or more embodiments have been described. Nevertheless, it will be understood that various modifications may be made.

## Claims

1. A method comprising:
forming a laminate of fabric impregnated with resin (18);
layering an open cell material (22) in the absence of said resin (18) within at least one layer of said laminate to form a composite article layup
encapsulating said composite article lay up in a vacuum device to facilitate removal of volatiles (36) from said composite article layup;
vaporizing volatiles (36) from said resin (18);
transporting said volatiles (36) through said open cell material (22) from said resin (18) away from said composite article layup;
flowing said resin (18) into said open cell material (22);
filling open cells of said open cell material (22) with resin (18) after said volatiles (36) have transported through said open cell material (22) out of said vacuum device;
consolidating said resin (18) and said fabric and said open cell material (22); and
curing said resin (18) in said composite article layup, **characterized in that** said open cell material (22) comprises a braided tube.

2. The method of claim 1, further comprising:
applying a compaction vacuum to said composite article layup in said vacuum device.

3. The method of claim 1 or claim 2, further comprising:
degassing said resin (18) in said composite article layup.

4. The method of any preceding claim wherein said resin (18) comprises a polyimide material.

5. The method of any preceding claim further comprising:
forming transport passages through said open cell material (22) from said resin (18) to an exterior of said composite article layup.

6. The method of claim 5 wherein said transport passages are formed in a predetermined pattern from a first location proximate said resin (18) within said laminate to a second location proximate an outlet of said vacuum device.

7. The method of any preceding claim wherein layering said open cell material (22) includes placing layers of open cell material (22) between plies of said fabric.

8. A composite article lay-up comprising:
a first layer of resin impregnated fiber material (16),
a second layer of resin impregnated fiber material (24),
an open cell material (22) layered between said first layer (16) and said second layer (24), said open cell material (22) having no resin at a first stage of a resin cure cycle, said open cell material (22) having passages configured to flow volatiles (36) formed during said first stage of said resin cure cycle, said open cell material (22) configured to fill with said resin (18) during a second stage of said resin cure cycle, said open cell material (22) configured to form an integral structure with said first layer (16) and said second layer (24) as part of the composite article at the completion of said resin cure cycle, **characterized in that** said open cell material (22) comprises a braided tube.

9. The composite article of claim 8, wherein said resin (18) is a polyimide resin.

10. The composite article of claim 8 or claim 9, comprising:
at least one pattern formed by said open cell material (22) in said composite article, said pattern configured to flow said volatiles (36) from a first portion of said composite article to a second portion of said composite article, to evacuate said volatiles (36) out of the composite article.

11. The composite article of claim 10, wherein said at least one pattern reduces the resistance to flow of said volatiles (36) from within said composite article to an exit of said composite article.

12. The composite article of claim 10 or claim 11, wherein said pattern is selected from the group consisting of strip, lattice, or sheet.

## Patentansprüche

1. Verfahren, das Folgendes umfasst:
Bilden eines Laminats aus Gewebe, das mit Harz (18) imprägniert ist;
Schichten eines offenzelligen Materials (22) in Ermangelung des Harzes (18) innerhalb mindestens einer Schicht des Laminats, um eine Verbundartikellaminierung zu bilden
Einkapseln der Verbundartikellaminierung in einer Vakuumvorrichtung, um die Entfernung von flüchtigen Stoffen (36) aus der Verbundartikellaminierung zu ermöglichen;
Verdampfen flüchtiger Stoffe (36) aus dem Harz (18);
Transportieren der flüchtigen Stoffe (36) durch das offenzellige Material (22) aus dem Harz (18) weg von der Verbundartikellaminierung;
Leiten des Harzes (18) in das offenzellige Material (22);
Füllen offener Zellen des offenzelligen Materials (22) mit Harz (18), nachdem die flüchtigen Stoffe (36) durch das offenzellige Material (22) aus der Vakuumvorrichtung heraustransportiert wurden;
Konsolidieren des Harzes (18) und des Gewebes und des offenzelligen Materials (22); und
Aushärten des Harzes (18) in der Verbundartikellaminierung,
**dadurch gekennzeichnet, dass** das offenzellige Material (22) einen Gewebeschlauch umfasst.

2. Verfahren nach Anspruch 1, das ferner Folgendes umfasst:
Anwenden eines Verdichtungsvakuums an der Verbundartikellaminierung in der Vakuumvorrichtung.

3. Verfahren nach Anspruch 1 oder Anspruch 2, das ferner Folgendes umfasst:
Entgasen des Harzes (18) in der Verbundartikellaminierung.

4. Verfahren nach einem der vorhergehenden Ansprüche, wobei das Harz (18) ein Polyimidmaterial umfasst.

5. Verfahren nach einem der vorhergehenden Ansprüche, das ferner Folgendes umfasst:
Bilden von Transportwegen durch das offenzellige Material (22) vom Harz (18) zu einer Außenfläche der Verbundartikellaminierung.

6. Verfahren nach Anspruch 5, wobei die Transportwege in einem vorbestimmten Muster von einer ersten Stelle in der Nähe des Harzes (18) innerhalb des Laminats bis zu einer zweiten Stelle in der Nähe eines Auslasses der Vakuumvorrichtung gebildet werden.

7. Verfahren nach einem der vorhergehenden Ansprüche, wobei das Schichten des offenzelligen Materials (22) das Platzieren von Schichten offenzelligen Materials (22) zwischen Laminierungen des Gewebes beinhaltet.

8. Verbundartikellaminierung, die Folgendes umfasst:
eine erste Schicht aus Harz, die mit Fasermaterial (16) imprägniert ist,
eine zweite Schicht aus Harz, die mit Fasermaterial (24) imprägniert ist,
ein offenzelliges Material (22), das zwischen der ersten Schicht (16) und der zweiten Schicht (24) geschichtet ist, wobei das offenzellige Material (22) in einer ersten Stufe eines Harzaushärtezyklus kein Harz aufweist, wobei das offenzellige Material (22) Wege aufweist, die so konfiguriert sind, dass sie flüchtige Stoffe (36), die während der ersten Stufe des Harzaushärtezyklus gebildet werden, leiten, wobei das offenzellige Material (22) so konfiguriert ist, dass es während einer zweiten Stufe des Harzaushärtezyklus mit dem Harz (18) gefüllt wird, wobei das offenzellige Material (22) so konfiguriert ist, dass es bei Abschluss des Harzaushärtezyklus eine integrale Struktur mit der ersten Schicht (16) und der zweiten Schicht (24) als Teil des Verbundartikels bildet,
**dadurch gekennzeichnet, dass** das offenzellige Material (22) einen Gewebeschlauch umfasst.

9. Verbundartikel nach Anspruch 8, wobei das Harz (18) ein Polyimidharz ist.

10. Verbundartikel nach Anspruch 8 oder Anspruch 9, der Folgendes umfasst:
mindestens ein Muster, das aus dem offenzelligen Material (22) in dem Verbundartikel gebildet wird, wobei das Muster so konfiguriert ist, dass die flüchtigen Stoffe (36) von einem ersten Abschnitt des Verbundartikels zu einem zweiten Abschnitt des Verbundartikels fließen, um die flüchtigen Stoffe (36) aus dem Verbundartikel herauszuleiten.

11. Verbundartikel nach Anspruch 10, wobei das mindestens eine Muster den Strömungswiderstand der flüchtigen Stoffe (36) aus dem Verbundartikel zu einem Ausgang des Verbundartikels reduziert.

12. Verbundartikel nach Anspruch 10 oder Anspruch 11, wobei das Muster aus der Gruppe gewählt wird, die aus Streifen, Gitter oder Folie besteht.

## Revendications

1. Procédé comprenant :
la formation d'un stratifié de tissu imprégné de résine (18) ;
la stratification d'un matériau à cellules ouvertes (22) en l'absence de ladite résine (18) à l'intérieur d'au moins une couche dudit stratifié pour former un empilage d'article composite ;
l'encapsulation dudit empilage d'article composite dans un dispositif à vide pour faciliter l'élimination de matières volatiles (36) dudit empilage d'article composite ;
la vaporisation de matières volatiles (36) à partir de ladite résine (18) ;
le transport desdites matières volatiles (36) à travers ledit matériau à cellules ouvertes (22) à partir de ladite résine (18) à l'écart dudit empilage d'article composite ;
l'écoulement de ladite résine (18) dans ledit matériau à cellules ouvertes (22) ;
le remplissage des cellules ouvertes dudit matériau à cellules ouvertes (22) avec de la résine (18) après que lesdites matières volatiles (36) ont été transportées à travers ledit matériau à cellules ouvertes (22) hors dudit dispositif à vide ;
la consolidation de ladite résine (18) et dudit tissu et dudit matériau à cellules ouvertes (22) ; et
le durcissement de ladite résine (18) dans ledit empilage d'article composite, **caractérisé en ce que**
ledit matériau à cellules ouvertes (22) comprend un tube tressé.

2. Procédé selon la revendication 1, comprenant en outre :
l'application d'un vide de compactage audit empilage d'article composite dans ledit dispositif à vide.

3. Procédé selon la revendication 1 ou la revendication 2, comprenant en outre :
le dégazage de ladite résine (18) dans ledit empilage d'article composite.

4. Procédé selon une quelconque revendication précédente, dans lequel ladite résine (18) comprend un matériau polyimide.

5. Procédé selon une quelconque revendication précédente, comprenant en outre :
la formation de passages de transport à travers ledit matériau à cellules ouvertes (22) de ladite résine (18) à un extérieur dudit empilage d'article composite.

6. Procédé selon la revendication 5, dans lequel lesdits passages de transport sont formés selon un motif prédéterminé depuis un premier emplacement à proximité de ladite résine (18) à l'intérieur dudit stratifié jusqu'à un second emplacement à proximité d'une sortie dudit dispositif à vide.

7. Procédé selon une quelconque revendication précédente, dans lequel la stratification dudit matériau à cellules ouvertes (22) comporte le placement de couches de matériau à cellules ouvertes (22) entre les plis dudit tissu.

8. Empilage d'article composite comprenant :
une première couche de matériau fibreux imprégné de résine (16),
une seconde couche de matériau fibreux imprégné de résine (24),
un matériau à cellules ouvertes (22) stratifié entre ladite première couche (16) et ladite seconde couche (24), ledit matériau à cellules ouvertes (22) n'ayant pas de résine à une première étape d'un cycle de durcissement de résine, ledit matériau à cellules ouvertes (22) ayant des passages configurés pour écouler des matières volatiles (36) formées pendant ladite première étape dudit cycle de durcissement de résine, ledit matériau à cellules ouvertes (22) étant configuré pour se remplir avec ladite résine (18) pendant une seconde étape dudit cycle de durcissement de résine, ledit matériau à cellules ouvertes (22) étant configuré pour former une structure intégrale avec ladite première couche (16) et ladite seconde couche (24) en tant que partie de l'article composite à la fin dudit cycle de durcissement de résine,
**caractérisé en ce que**
ledit matériau à cellules ouvertes (22) comprend un tube tressé.

9. Article composite selon la revendication 8, dans lequel ladite résine (18) est une résine polyimide.

10. Article composite selon la revendication 8 ou la revendication 9, comprenant :
au moins un motif formé par ledit matériau à cellules ouvertes (22) dans ledit article composite, ledit motif étant configuré pour écouler lesdites matières volatiles (36) d'une première partie dudit article composite à une seconde partie dudit article composite, pour évacuer lesdites matières volatiles (36) hors de l'article composite.

11. Article composite selon la revendication 10, dans lequel ledit au moins un motif réduit la résistance à l'écoulement desdites matières volatiles (36) depuis l'intérieur dudit article composite jusqu'à une sortie dudit article composite.

12. Article composite selon la revendication 10 ou la revendication 11, dans lequel ledit motif est sélectionné dans le groupe constitué d'une bande, d'une grille ou d'une feuille.
